# EUROPÄISCHE PATENTSCHRIFT

(11) **EP 1 299 438 B1**
(45) Veröffentlichungstag und Bekanntmachung des Hinweises auf die Patenterteilung: **15.06.2005**
(21) Anmeldenummer: 01960414.9
(22) Anmeldetag: 28.06.2001
(51) Int. Cl.: C08F 255/02, C08F 8/46, C09J 151/06, B32B 27/00

(54) **PFROPFCOPOLYMERMISCHUNG MIT VERBESSERTEN EIGENSCHAFTEN UND DEREN VERWENDUNG ALS HAFTVERMITTLER**
GRAFT COPOLYMER MIXTURE WITH IMPROVED PROPERTIES AND THE USE THEREOF AS AN ADHESION PROMOTER
MELANGE DE COPOLYMERES GREFFES A PROPRIETES AMELIOREES ET SON UTILISATION COMME AGENT ADHESIF

(30) Priorität: 03.07.2000 DE 10031393
(43) Veröffentlichungstag der Anmeldung: 09.04.2003
(73) Patentinhaber: Basell Polyolefine GmbH, 50389 Wesseling (DE)
(72) Erfinder: VOGT, Heinz, 67061 Ludwigshafen (DE); DROCHNER, Klaus, 67373 Dudenhofen (DE)
(86) Internationale Anmeldenummer: PCT/EP2001/007412
(87) Internationale Veröffentlichungsnummer: WO 2002/002661

(56) Entgegenhaltungen:
- WO-A-90/01504
- US-A- 4 698 395
- US-A- 4 762 882

## Beschreibung

Die vorliegende Erfindung betrifft eine Pfropfcopolymermischung, ein Verfahren zur Herstellung einer Pfropfcopolymermischung sowie deren Verwendung als Haftvermittler, beispielsweise in einem Mehrschichtverbund.

Es ist bekannt, dass mit Homopolymeren und unpolaren Copolymeren des Ethylens keine ausreichende Verbundhaftung, beispielsweise an metallische Oberflächen oder auch an polare Kunststoffe, wie etwa Polyamide, EVOH, erzielt werden kann. Um eine ausreichende Verbundhaftung zu gewährleisten bzw. die Verbundhaftung zu verbessern, werden üblicherweise dünne Schichten eines Haftvermittlers zwischen die Substratoberfläche und das Polyethylen aufgebracht. Auch andere unpolare Kunststoffe, wie etwa Polypropylen, Fluor- oder Siliconpolymere lassen sich häufig nur schwer verkleben. Als gebräuchliche Haftvermittler auf Ethylenbasis sind im Stand der Technik polare Co- oder Terpolymere des Ethylens mit Vinylacetat, Acrylsäure oder Acrylester bekannt. Mit vorgenannten Substanzen lässt sich eine verbesserte Verbundhaftung zu polaren Kunststoffen oder auch metallischen Oberflächen erzielen. Darüber hinaus eignen sich auch sogenannte Ionomere, also thermoplastische Copolymere des Ethylens mit Carboxygruppen-enthaltenden Monomeren, als Haftvermittler für den vorgenannten Zweck. Schließlich können auch mit Dicarbonsäuren oder deren Anhydriden gepfropfte Polyethylene als Haftvermittler fungieren.

Die Herstellung solcher gepfropften Polyethylene und auch deren Verwendung als Haftvermittler ist bekannt. In der US-Patentschrift 4 762 882 wird beispielsweise ein modifiziertes Olefinharz beschrieben, welches aus einem Copolymer aus Ethylen und einem α-Olefin besteht, auf welches eine ethylenisch ungesättigte Carbonsäure oder ein Derivat davon aufgepfropft wurde. Dieses Pfropfcopolymer eignet sich beispielsweise als Haftvermittler für EVOH und kann gegebenenfalls unter Zumischung eines weiteren nicht modifizierten bzw. ungepfropften Polymers oder Copolymers als Klebstoff verwendet werden. Nachteilig ist jedoch, daß sich die in der US 4 762 882 beschriebenen Haftvermittler nur schwer verarbeiten lassen. Ein weiterer Nachteil der vorbeschriebenen Pfropfcopolymere liegt darin begründet, dass sich das polymere Material in der Kälte spröde verhält und die Gefahr besteht, dass es bricht. Die Sprödigkeit des Materials bewirkt außerdem, dass die Polymermischungen gemäß der US 4 762 882 nicht das gewünschte kohäsive (elastische) Bruchbild im Schältest aufweisen.

Auch in der EP 0 247 877 wird ein Pfropfcopolymer als Haftvermittler beschrieben. Als Aufpfropfungsmonomer wird Fumarsäure verwendet. Zur Aufpfropfung geeignete Polymere sind Copolymere des Ethylens mit Butylacrylat, Ethylacrylat, Methylacrylat oder Vinylacetat. Die auf diesen polaren Copolymeren basierenden Haftvermittler neigen allerdings bei der Aufbringung zu einem Kleben auf der Andruckwalze und sind daher nur schwer zu verarbeiten. Ein weiterer Nachteil der Haftvermittler bzw. Pfropfcopolymere gemäß der EP 0 247 877 besteht darin, dass nur in einem begrenzten Temperaturbereich (unterhalb 60°C) eine ausreichende Verbundhaftung zwischen Substrat und zu verklebendem Material gewährleistet ist.

Die vorherigen Ausführungen zeigen, dass die im Stand der Technik bekannten auf Propfcopolymeren basierenden Haftvermittler eine Reihe gravierender Nachteile aufweisen. Es besteht daher ein starkes Bedürfnis, eine als Haftvermittler geeignete Pfropfcopolymermischung zur Verfügung zu stellen, welche die vorgenannten Nachteile des Standes der Technik vermeidet.

Darüber hinaus wäre es wünschenswert, eine Pfropfcopolymermischung mit einem möglichst geringen Gehalt an Pfropfmonomer bereitzustellen, da diese, wie beispielsweise im Falle des Maleinsäureanhydrids, häufig toxisch sind und daher aus arbeitshygienischen Gründen eine quantitative Umsetzung bzw. Pfropfausbeute gewährleistet sein sollte. Weiterhin ist eine möglichst hohe Haftfestigkeit über einen möglichst weiten Temperaturbereich von -40°C bis +80°C, ein kohäsiver Klebebruch, d.h. eine Trennung des Haftvermittlers bzw. Klebers in sich (beim Schälversuch), eine leichte Verarbeitbarkeit mit geringem Einsprungverhalten (Neck In), eine hohe Beständigkeit gegenüber der Bildung von Spannungsrissen sowie eine Vermeidung des Klebens auf der Andruckwalze bei der Verarbeitung wünschenswert. Eine Aufgabe der vorliegenden Erfindung besteht darin, einen auf einer Pfropfcopolymermischung basierenden Haftvermittler zur Verfügung zu stellen, der die genannten vorteilhaften Eigenschaften aufweist und gleichzeitig die bekannten Nachteile vermeidet.

Weitere Aufgaben ergeben sich aus der nachfolgenden Beschreibung der Erfindung.

Die erfindungsgemäß gestellte Aufgabe wird durch eine Pfropfcopolymermischung gelöst, die Komponenten
a) 10 bis 50 Gew.-%, bezogen auf die Mischung, eines EthylenAcrylsäure-Copolymers und/oder eines Ethylen-Acrylsäure-Acrylsäureester-Terpolymers;
b) 50 bis 90 Gew.-%, bezogen auf die Mischung, eines Ethylen-α-Olefin-Copolymers; und
c) ethylenisch ungesättigte Dicarbonsäuren und/oder Dicarbonsäureanhydride umfaßt;
wobei die ethylenisch ungesättigten Dicarbonsäuren und/oder Dicarbonsäureanhydride (c) auf (a) und (b) aufgepfropft sind.

Vorteilhafte Ausgestaltungen der erfindungsgemäßen Pfropfcopolymermischung sind in den Unteransprüchen definiert.

Erfindungsgemäß besonders geeignete Copolymere des Ethylens mit α-Olefinen sind Polyethylene mittlerer Dichte (PE-MD) oder Polyethylene niedriger Dichte (PE-LLD), welche unter Verwendung von Ziegler-, Phillips- oder auch Metallocenkatalysatoren nach bekannten Verfahren herstellbar sind. In einer besonders geeigneten Ausführungsform werden als α-Olefine im Ethylen-α-Olefin-Copolymer 1-Buten, 1-Hexen und/oder 1-Octen verwendet. Die gemäß der vorliegenden Erfindung bevorzugt verwendeten Ethylen-a-Olefin-Copolymere weisen eine Dichte von 0,920 g/cm³ bis 0,945 g/cm³, vorzugsweise von 0,930 g/cm³ bis 0940 g/cm³ und besonders bevorzugt von etwa 0,935 g/cm³ und einen Schmelzfließindex MFI (190/2,16) von 0,1 bis 10 g/10 min, vorzugsweise von 0,2 bis 6 g/10 min und besonders bevorzugt von 0,2 bis 4 g/10 min auf. Die vorgenannten Werte für die Dichte des erfindungsgemäßen Copolymers bestimmen sich nach ISO 1183, die Werte für den Schmelzindex MFI nach ISO 1133.

Vorzugsweise ist die Komponente a) ein Ethylen-Acrylsäure-Copolymer oder ein Ethylen-Acrylsäure-Acrylsäureester-Terpolymer oder aber eine Mischung der vorgenannten Copolymere bzw. Terpolymere. Diese acrylsäurehaltigen Polyethylene sind durch radikalische Polymerisation im Hochdruckprozeß herstellbar. In einer erfindungsgemäß besonders bevorzugten Ausführungsform beträgt der Gehalt an Acrylsäure in der Propfcopolymermischung 0,1 bis 5 Gew.-%, besonders bevorzugt 1 bis 3 Gew.-%, bezogen auf die Komponenten a) und b). Erfindungsgemäß ist es weiterhin bevorzugt, dass der Gehalt an Acrylsäure im verwendeten Ethylen-Acrylsäure-Copolymer und/oder Ethylen-Acrylsäure-Acrylsäureester-Terpolymer 1 bis 10 Gew.-%, vorzugsweise 3 bis 6 Gew.-% und besonders bevorzugt etwa 4 Gew.-%, bezogen auf das Polymer, und/oder der Gehalt an Acrylsäureester im Ethylen-Acrylsäure-Acrylsäureester-Terpolymer 1 bis 15 Gew.-%, vorzugsweise 5 bis 10 Gew.-% und besonders bevorzugt etwa 8 Gew.-%, bezogen auf das Terpolymer, ausmacht.

Gemäß der vorliegenden Erfindung ist es weiterhin besonders bevorzugt, dass der Gehalt an ethylenisch ungesättigten Dicarbonsäuren und/oder Dicarbonsäureanhydriden 0,01 bis 0,5 Gew.-%, vorzugsweise 0,05 bis 0,15 Gew.-% und besonders bevorzugt etwa 0,1 Gew.-%, bezogen auf die Komponenten a) und b), ausmacht. Die erfindungsgemäß bevorzugten niedrigen Konzentrationen an Pfropfmonomeren sind nicht nur aus arbeitshygienischen Gründen im Hinblick auf die Toxizität von Vorteil, sondern auch von wirtschaftlichem Nutzen. Im allgemeinen ist bei der Verwendung von geringen Konzentrationen an Pfropfmonomeren, beispielsweise von < 0,25 Gew.-%, bezogen auf das Basispolymer, davon auszugehen, dass die Pfropfausbeute nahezu quantitativ ist. Im Sinne der vorliegenden Erfindung besonders geeignete ethylenisch ungesättigte Dicarbonsäuren bzw. Anhydride umfassen Maleinsäure, Fumarsäure, Itaconsäure, Maleinsäureanhydrid und Itaconsäureanhydrid. In einer besonders bevorzugten Ausführungsform wird als Komponente c), also als Pfropfmonomer, Maleinsäureanhydrid (MSA) verwendet.

Ein weiterer Gegenstand der vorliegenden Anmeldung ist ein Verfahren zur Herstellung einer Pfropfcopolymermischung, umfassend die Komponenten a), b) und c), wobei die ethylenisch ungesättigten Dicarbonsäuren und/oder Dicarbonsäureanhydride c) auf a) und b) aufgepfropft sind, welches dadurch gekennzeichnet ist, dass die Herstellung der Pfropfcopolymermischung aus dem EthylenAcrylsäure-Copolymer und/oder Ethylen-Acrylsäure-Acrylsäureester-Terpolymer, dem Ethylen-α-Olefin-Copolymer und den ethylenisch ungesättigten Dicarbonsäuren und/oder Dicarbonsäureanhydriden in einem Schritt erfolgt. Der Ausdruck "in einem Schritt" im Sinne der vorliegenden Erfindung bedeutet, dass die vermischung der Komponenten a), b) und c) sowie die Pfropfcopolymerisation in einem einzigen Verfahrensschritt ("Eintopfreaktion") geschieht.

Für das erfindungsgemäße Verfahren geeignete Extruder und Extrusionstechniken sind beispielsweise in US 3 862 265, US 3 953 655 sowie US 4 001 172 beschrieben. Für das erfindungsgemäße Verfahren besonders geeignet sind kontinuierliche Kneter und insbesondere bevorzugt sind sogenannte Zweiwellenkneter. Vorzugsweise wird das erfindungsgemäße Verfahren zur Herstellung der Pfropfcopolymermischung in einem Temperaturbereich von 210°C bis 300°C und bei Drücken von 1 bis 500 bar durchgeführt. Die Herstellung des Pfropfcopolymers geschieht vorzugsweise in Abwesenheit eines radikalisch zerfallenen Initiators. Es können jedoch auch geringe Mengen, beispielsweise 0,01 bis 0,1 Gew.-%, bezogen auf die Polymermischung eines organischen Peroxids bei der Pfropfreaktion anwesend sein.

Die Pfropfung der ungesättigten Carbonsäuren und/oder deren Anhydride kann gemäß der vorliegenden Erfindung in der Weise erfolgen, dass die polymere Komponente a) und die polymere Komponente b) sowie das zu pfropfende Monomer c) aufgeschmolzen und innig vermischt werden und dann bei erhöhter Temperatur, vorzugsweise bei 210 bis 300°C, insbesondere bevorzugt bei 220 bis 280°C und ganz besonders bevorzugt bei 240 bis 280°C zu der erfindungsgemäßen Pfropfcopolymermischung umgesetzt werden. Die Reihenfolge der Zugabe der Komponenten in den Reaktor bzw. Extruder ist unkritisch.

Die Pfropfcopolymermischungen gemäß der vorliegenden Erfindung weisen trotz des sehr geringen Anteils an Pfropfmonomeren überraschenderweise exzellente Haft- bzw. Schälfestigkeiten auf. Besonders hohe Schälfestigkeiten sind im 3-Schicht-Verbund mit Epoxidharz und Polyethylen mittlerer Dichte oder auch Polyethylen hoher Dichte als Mantelmaterialien zu beobachten. Die hohe Schälfestigkeit ist auch bei hohen Temperaturen (80°C) feststellbar, d.h. es ist kein signifikanter Abfall der Haftfestigkeit bei hohen Temperaturen zu beobachten. Die trotz des äußerst geringen Anteils an Pfropfmonomeren beobachteten ausgezeichneten Haftfestigkeiten im 3-Schicht-Verbund mit zahlreichen Materialien führen die Erfinder auf einen möglichen synergistischen Effekt zwischen dem Pfropfmonomer und der Acrylsäure-enthaltenden Polyethylenkomponente a) zurück.

Weiterhin zeichnen sich die Pfropfcopolymermischungen gemäß der vorliegenden Erfindung durch eine geringe Feuchtigkeitsaufnahme und ein ausgezeichnetes Verarbeitungsverhalten aus. Die leichte Verarbeitbarkeit der erfindungsgemäßen Pfropfcopolymere besteht u.a. in einem geringen Einsprung-Verhalten (Neck In). Die erfindungsgemäßen Pfropfcopolymermischungen weisen im Schältest zudem das gewünschte kohäsive (elastische) Bruchbild auf, was insbesondere bei der Beschichtung von Rohren eine besonders wichtige Eigenschaft bzw. Voraussetzung darstellt.

Ein weiterer Gegenstand der vorliegenden Erfindung ist die Verwendung der Pfropfcopolymermischung als Haftvermittler, vorzugsweise als Haftvermittler für Metallrohrbeschichtungen und insbesondere bevorzugt als Haftvermittler für Stahlrohrbeschichtungen. Gegenstand der vorliegenden Erfindung ist auch ein Mehrschichtverbund, welcher dadurch gekennzeichnet ist, dass der Verbund wenigstens eine Schicht der erfindungsgemäßen Pfropfcopolymermischung umfasst sowie eine oder mehrere Schichten, ausgewählt aus Metall, Kunststoff, insbesondere polaren Kunststoffmaterialien, Glas, Keramik und weiteren Polymermatieralien.

Anhand der nachfolgenden Beispiele 1-3 werden weitere Vorteile der erfindungsgemäßen Haftvermittler deutlich. Es sei darauf hingewiesen, dass die nachfolgenden Beispiele der Veranschaulichung der Erfindung dienen und nicht als Einschränkung zu verstehen sind.

### Beispiel 1

70 Gew.-Teile eines Copolymeren des Ethylens mit Hexen-1 mit einer Dichte von 0,936 g/cm³ und einem Schmelzindex MFI (190/2.16) von 3,0 g/10 min wurden zusammen mit 30 Gew.-Teilen eines Ethylen-acrylsäure-n-butylacrylat-Terpolymeren mit einem Acrylsäure-Gehalt von 4 Gew.-% und einem n-Butylacrylat-Gehalt von 8 Gew.-% in einem Zweiwellenkneter, ZSK 57 von Werner und Pfleiderer, unter der Zugabe von 0,08 Gew.-% Maleinsäureanhydrid aufgeschmolzen, das bei 220°C auf die Polyolefinmischung aufgepfropft wurde. Die mittlere Verweilzeit der Pfropfkomponenten im Extruder betrug 2 min, der Polymerdurchsatz 50 kg/h bei 150 Upm.

### Vergleichsbeispiel 1

70 Gew.-Teile eines Copolymeren des Ethylens mit Hexen-1 mit einer Dichte von 0,936 g/cm³ und einem Schmelzindex MFI (190/2.16) von 3,0 g/10 min wurden zusammen mit 30 Gew.-Teilen eines Ethylen-n-butylacrylat-Copolymeren mit einem n-Butylacrylat-Gehalt von 15 Gew.-% in einem Zweiwellenkneter, ZSK 57 von Werner und Pfleiderer, unter der Zugabe von 0,5 Gew.-% Maleinsäureanhydrid aufgeschmolzen, das bei 220°C auf die Polyolefinmischung aufgepfropft wurde.

### Vergleichsbeispiel 2

100 Gew.-Teile von dem Copolymeren des Ethylens mit Hexen-1 mit einer Dichte von 0,936 g/cm³ und einem Schmelzindex MFI (190/2.16) von 3,0 g/10 min aus Beispiel 1 wurden unter der Zugabe von 0,08 Gew.-% Maleinsäureanhydrid aufgeschmolzen, das bei 220°C auf die Polyolefinmischung aufgepfropft wurde.

### Vergleichsbeispiel 3

100 Gew.-Teile von dem Ethylen-acrylsäure-n-butylacrylat-Terpolymeren mit einem Acrylsäure-Gehalt von 4 Gew.-% und einem n-Butylacrylat-Gehalt von 8 Gew.-% aus dem Beispiel 1 wurden in einem Zweiwellenkneter, ZSK 57 von Werner und Pfleiderer, unter der Zugabe von 0,08 Gew.-% Maleinsäureanhydrid aufgeschmolzen, das bei 220°C auf die Polyolefinmischung aufgepfropft wurde.

Von den erhaltenen Produkten wurden 2,7 mm starke Eisen/Epoxidharz/Haftvermittler/Polyethylen-Verbundplatten gepresst und die Schälfestigkeiten nach einem Test in Anlehnung an DIN 30 670 bestimmt.

In der nachfolgenden Tabelle 1 wird die Schälfestigkeit im 3-Schicht-Verbund bei verschiedenen Temperaturen unter Verwendung des Haftvermittlers gemäß Beispiel 1 widergegeben.

**TABELLE 1**

| Temperatur in °C | Schälfestigkeit im 3-Schicht-Verbund *) in N/2 cm |
|---|---|
| 25 | 550 |
| 50 | 540 |
| 70 | 520 |
| 80 | 510 |

| | |
|---|---|
| *) Stahl/Basebox/Haftvermittler/Lupolen 3652 D sw 00413 | |

Die erhaltenen Schälfestigkeiten zeigen, daß die hohe Haftfestigkeit des erfindungsgemäßen Haftvermittlers auch bei steigenden Temperaturen gegeben ist. Auch bei Temperaturen über 60°C wurden Werte von über 500 N/2 cm erhalten.

Die nachfolgende Tabelle 2 zeigt die bei der Untersuchung der Haftvermittlereigenschaften des erfindungsgemäßen Beispielsl sowie der Vergleichsbeispiele 1-3 erhaltenen Ergebnisse.

**TABELLE 2**

| Haftvermittler | Beispiel 1 | Vergleichsbeispiel 1 | Vergleichsbeispiel 2 | Vergleichsbeispiel 3 |
|---|---|---|---|---|
| Acrylsäure-Gehalt der Mischung [Gew.-%] | 1,2 | - | - | 4 |
| MSA-Gehalt der gepfropften Mischung [Gew.-%] | 0,08 | 0,5 | 0,08 | 0,08 |
| Feuchtigkeitsaufnahme nach 30 d/80°C [Gew.-%] | 0,32 | 0,46 | 0,28 | 0,52 |
| Schälfestigkeit bei 23°C im 3-Schicht-Verbund *) [N/2 cm] | 550 | 450 | 170 | 260 |
| Schälfestigkeit bei 80°C im 3-Schicht-Verbund *) [N/2 cm] | 510 | 100 | < 50 | Keine Haftung |
| Kohäsiver Kleberbruch bei 23°C | Ja | Ja | Nein | - (K. Haftung) |
| Verarbeitungsverhalten | Gut | Gut | Ungenügend | Gut |
| Neck In [%] | 14 | 16 | 60 | 12 |

| | | | | |
|---|---|---|---|---|
| *) Stahl/Basepox/Haftvermittler/Lupolen 3652 D sw 00413; | | | | |

die angegebenen Schälfestigkeiten sind Mittelwerte aus 5 Messungen

Tabelle 2 ist zweifelsfrei zu entnehmen, daß der erfindungsgemäße Haftvermittler (Beispiel 1) nicht nur eine relativ geringe Feuchtigkeitsaufnahme aufweist, sondern eine, insbesondere bei 80 °C, deutlich höhere Schälfestigkeit gegenüber den Haftvermittlern des Standes der Technik aufweist. Zudem beobachtet man im Schältest den gewünschten kohäsiven (elastische) Kleberbruch und ein hervorragendes Verarbeitungsverhalten.

## Patentansprüche

1. Propfcopolymermischung umfassend die Komponenten
a) 10 bis 50 Gew.-%, bezogen auf die Mischung, eines Ethylen-Acrylsäure-Copolymers und/oder eines Ethylen-Acrylsäure-Acrylsäureester-Terpolymers;
b) 50 bis 90 Gew.-%, bezogen auf die Mischung, eines Ethylen-α-Olefin-Copolymers; und
c) ethylenisch ungesättigte Dicarbonsäuren und/oder Dicarbonsäureanhydride;
wobei die ethylenisch ungesättigten Dicarbonsäuren und/oder Dicarbonsäureanhydride (c) auf (a) und (b) aufgepfropft sind.

2. Propfcopolymermischung gemäß Anspruch 1, **dadurch gekennzeichnet, daß** der Gehalt an Acrylsäure 0,1 bis 5 Gew.-%, besonders bevorzugt 1 bis 3 Gew.-%, bezogen auf die Komponenten (a) und (b), ausmacht.

3. Propfcopolymermischung gemäß Anspruch 1 oder 2, **dadurch gekennzeichnet, daß** der Gehalt an ethylenisch ungesättigten Dicarbonsäuren und/oder Dicarbonsäureanhydriden 0,01 bis 0,5 Gew.-%, vorzugsweise 0,05 bis 0,15 Gew.-% und besonders bevorzugt etwa 0,1 Gew.-%, bezogen auf die Komponenten (a) und (b), ausmacht.

4. Propfcopolymermischung gemäß einem der vorhergehenden Ansprüche,**dadurch gekennzeichnet, daß** als ethylenisch ungesättigte Dicarbonsäure Maleinsäureanhydrid verwendet wird.

5. Propfcopolymermischung gemäß einem der vorhergehenden Ansprüche, **dadurch gekennzeichnet, daß** das verwendete Ethylen-α-Olefin-Copolymer eine Dichte von 0,920 g/cm³ bis 0,945 g/cm³, vorzugsweise von 0,930 g/cm³ bis 0,940 g/cm³ und besonders bevorzugt von etwa 0,935 g/cm³ und einen Schmelzfließindex (190/2,16) von 0,1 bis 10 g/10 min, vorzugsweise von 0,2 bis 6 g/10 min und besonders bevorzugt von etwa 0,2 bis 4 g/10 min aufweist.

6. Propfcopolymermischung gemäß einem der vorhergehenden Ansprüche, **dadurch gekennzeichnet, daß** der Gehalt an Acrylsäure im verwendeten Ethylen-Acrylsäure-Copolymer und/oder EthylenAcrylsäure-Acrylsäureester-Terpolymer 1 bis 10 Gew.-%, vorzugsweise 3 bis 6 Gew.-% und besonders bevorzugt etwa 4 Gew.-%, bezogen auf das Polymer, und/oder der Gehalt an Acrylsäureester im Ethylen-Acrylsäure-Acrylsäureester-Terpolymer 1 bis 15 Gew.-%, vorzugsweise 5 bis 10 Gew.-% und besonders bevorzugt etwa 8 Gew.-%, bezogen auf das Terpolymer, ausmacht.

7. Propfcopolymermischung gemäß einem der vorhergehenden Ansprüche **dadurch gekennzeichnet, daß** das α-Olefin im Ethylen-α-Olefin-Copolymer 1-Buten, 1-Hexen und/oder 1-Octen ist.

8. Verfahren zur Herstellung einer Propfcopolymermischung gemäß einem der vorhergehenden Ansprüche, **dadurch gekennzeichnet, daß** die Herstellung der Pfropfcopolymermischung aus dem Ethylen-Acrylsäure-Copolymer und/oder Ethylen-Acrylsäure-Acrylsäureester-Terpolymer, dem Ethylen-α-Olefin-Copolymer und den ethylenisch ungesättigten Dicarbonsäuren und/oder Dicarbonsäureanhydriden in einem Schritt erfolgt.

9. Verwendung der Propfcopolymermischung gemäß einem Ansprüche 1 bis 7 als Haftvermittler, vorzugsweise als Haftvermittler für Metallrohrbeschichtungen, insbesondere bevorzugt als Haftvermittler für Stahlrohrbeschichtungen.

10. Mehrschichtverbund, **dadurch gekennzeichnet, daß** der Mehrschichtverbund wenigstens eine Schicht der Propfcopolymermischung gemäß einem der Ansprüche 1 bis 7 und eine oder mehrere Schichten, ausgewählt aus Metall, Kunststoff, Glas, Keramik und Polymermaterialien, umfaßt.

## Claims

1. A graft copolymer mixture comprising
a) from 10 to 50% by weight, based on the mixture, of an ethylene-acrylic acid copolymer and/or an ethylene-acrylic acid-acrylate terpolymer;
b) from 50 to 90% by weight, based on the mixture, of an ethylene-α-olefin copolymer; and
c) ethylenically unsaturated dicarboxylic acids and/or dicarboxylic anhydrides;
wherein the ethylenically unsaturated dicarboxylic acids and/or dicarboxylic anhydrides c) have been grafted onto a) and b).

2. A graft copolymer mixture as claimed in claim 1, **characterized in that** the amount of acrylic acid is from 0.1 to 5% by weight, most preferably from 1 to 3% by weight, based on components a) and b).

3. A graft copolymer mixture as claimed in claim 1 or 2, **characterized in that** the amount of ethylenically unsaturated dicarboxylic acids and/or dicarboxylic anhydrides is from 0.01 to 0.5% by weight, preferably from 0.05 to 0.15% by weight, and most preferably about 0.1% by weight, based on components a) and b).

4. A graft copolymer mixture as claimed in any one of the preceding claims, **characterized in that** maleic anhydride is used as ethylenically unsaturated dicarboxylic acid.

5. A graft copolymer mixture as claimed in any one of the preceding claims, **characterized in that** the ethylene-α-olefin copolymer used has a density of from 0.920 g/cm³ to 0.945 g/cm³, preferably from 0.930 g/cm³ to 0.940 g/cm³, and most preferably about 0.935 g/cm³, and a melt flow index (190/2.16) of from 0.1 to 10 g/10 min, preferably from 0.2 to 6 g/10 min, and most preferably from about 0.2 to 4 g/10 min.

6. A graft copolymer mixture as claimed in any one of the preceding claims, **characterized in that** the amount of acrylic acid in the ethylene-acrylic acid copolymer and/or ethylene-acrylic acid-acrylate terpolymer used is from 1 to 10% by weight, preferably from 3 to 6% by weight, and most preferably about 4% by weight, based on the polymer, and/or the amount of acrylate in the ethylene-acrylic acid-acrylate terpolymer is from 1 to 15% by weight, preferably from 5 to 10% by weight, and most preferably about 8% by weight, based on the terpolymer.

7. A graft copolymer mixture as claimed in any one of the preceding claims, **characterized in that** the α-olefin in the ethylene-α-olefin copolymer is 1-butene, 1-hexene and/or 1-octene.

8. A process for preparing a graft copolymer mixture as claimed in any one of the preceding claims, **characterized in that** the preparation of the graft copolymer mixture is carried out in one step starting from the ethylene-acrylic acid copolymer and/or ethylene-acrylic acid-acrylate terpolymer, the ethylene-α-olefin copolymer and the ethylenically unsaturated dicarboxylic acids and/or dicarboxylic anhydrides.

9. The use of a graft copolymer mixture as claimed in any one of claims 1 to 7 as an adhesion promoter, preferably as an adhesion promoter for metal pipe coatings, most preferably as an adhesion promoter for steel pipe coatings.

10. A multilayer composite, **characterized in that** the multilayer composite comprises at least one layer of a graft copolymer mixture as claimed in any one of claims 1 to 7 and one or more layers selected from metal, plastic, glass, ceramic and polymer materials.

## Revendications

1. Mélange de copolymères greffés comprenant les composants
a) 10% à 50% en poids, par rapport au mélange, d'un copolymère éthylène/acide acrylique et/ou d'un terpolymère éthylène/acide acrylique/ester acrylique;
b) 50% à 90% en poids, par rapport au mélange, d'un copolymère éthylène/α-oléfine; et
c) des acides dicarboxyliques à insaturation éthylénique et/ou des anhydrides dicarboxyliques;
les acides dicarboxyliques à insaturation éthylénique et/ou les anhydrides dicarboxyliques (c) étant greffés sur (a) et (b).

2. Mélange de copolymères greffés selon la revendication 1, **caractérisé en ce que** la teneur en acide acrylique est de 0,1% à 5% en poids, de manière plus particulièrement préférée de 1% à 3% en poids par rapport aux composants (a) et (b).

3. Mélange de copolymères greffés selon la revendication 1 ou 2, **caractérisé en ce que** la teneur en acides dicarboxyliques à insaturation éthylénique et/ou en anhydrides dicarboxyliques est de 0,01% à 0,5% en poids, de préférence de 0,05% à 0,15% en poids et de manière plus particulièrement préférée d'environ 0,1% en poids par rapport aux composants (a) et (b).

4. Mélange de copolymères greffés selon l'une quelconque des revendications précédentes, **caractérisé en ce que** l'on utilise l'anhydride maléique en tant qu'acide dicarboxylique à insaturation éthylénique.

5. Mélange de copolymères greffés selon l'une quelconque des revendications précédentes, **caractérisé en ce que** le copolymère éthylène/α-oléfine utilisé présente une densité de 0,920 g/cm³ à 0,945 g/cm³, de préférence de 0,930 g/cm³ à 0,940 g/cm³ et de manière plus particulièrement préférée d'environ 0,935 g/cm³, et un indice de fluidité à chaud (190/2,16) de 0,1 à 10 g/10 min, de préférence de 0,2 à 6 g/10 min et de manière plus particulièrement préférée d'environ 0,2 à 4 g/10 min.

6. Mélange de copolymères greffés selon l'une quelconque des revendications précédentes, **caractérisé en ce que** la teneur en acide acrylique du copolymère éthylène/acide acrylique et/ou du terpolymère éthylène/acide acrylique/ester acrylique utilisé est de 1% à 10% en poids, de préférence de 3% à 6% en poids et de manière plus particulièrement préférée d'environ 4% en poids par rapport au polymère, et/ou la teneur en ester acrylique du terpolymère éthylène/acide acrylique/ester acrylique est de 1% à 15% en poids, de préférence de 5% à 10% en poids et de manière plus particulièrement préférée d'environ 8% en poids par rapport au terpolymère.

7. Mélange de copolymères greffés selon l'une quelconque des revendications précédentes, **caractérisé en ce que** l'α-oléfine dans le copolymère éthylène/α-oléfine est le 1-butène, le 1-hexène et/ou le 1-octène.

8. Procédé de préparation d'un mélange de copolymères greffés selon l'une quelconque des revendications précédentes, **caractérisé en ce que** l'on réalise la préparation du mélange de copolymères greffés en une étape à partir du copolymère éthylène/acide acrylique et/ou du terpolymère éthylène/acide acrylique/ester acrylique, du copolymère éthylène/α-oléfine et des acides dicarboxyliques à insaturation éthylénique et/ou des anhydrides dicarboxyliques.

9. Utilisation du mélange de copolymères greffés selon l'une quelconque des revendications 1 à 7 en tant qu'agent adhésif, de préférence en tant qu'agent adhésif pour des revêtements de tubes métalliques, de manière plus particulièrement préférée en tant qu'agent adhésif pour des revêtements de tubes d'acier.

10. Matériau composite multicouche, **caractérisé en ce que** le matériau composite multicouche comprend au moins une couche du mélange de copolymères greffés selon l'une quelconque des revendications 1 à 7 et une ou plusieurs couches choisies parmi un métal, une matière plastique, le verre, la céramique et des matières polymères.
